# EUROPÄISCHE PATENTSCHRIFT

(11) **EP 2 774 817 B1**
(45) Veröffentlichungstag und Bekanntmachung des Hinweises auf die Patenterteilung: **18.04.2018**
(21) Anmeldenummer: 14400011.4
(22) Anmeldetag: 28.02.2014
(51) Int. Cl.: B60R 9/06

(54) **LASTENTRÄGERKUPPLUNG**
LOAD SUPPORT COUPLING
COUPLAGE DE SUPPORT DE CHARGE

(30) Priorität: 07.03.2013 DE 102013003967
(43) Veröffentlichungstag der Anmeldung: 10.09.2014
(73) Patentinhaber: WESTFALIA - Automotive GmbH, 33378 Rheda-Wiedenbrück (DE)
(72) Erfinder: Söffge, Friedhelm, D-71229 Leonberg (DE)
(74) Vertreter: Patentanwälte Bregenzer und Reule Partnerschaftsgesellschaft mbB

(56) Entgegenhaltungen:
- EP-A2- 1 170 178
- DE-A1-102006 013 465
- DE-A1-102008 047 110
- DE-U1- 9 401 820
- DE-U1-202006 012 073
- FR-A1- 2 688 178

## Beschreibung

Die Erfindung betrifft eine Lastenträgerkupplung für einen Lastenträger, zum lösbaren Befestigen an einem Kupplungskörper, insbesondere einer Kupplungskugel, einer Anhängekupplung eines Kraftfahrzeugs, mit einer Klemmeinrichtung, die Klemmteile umfasst, von denen mindestens eines ein Stell-Klemmteil bildet, das anhand eines Spannhebels zwischen einer zum Einbringen des Kupplungskörpers zwischen die Klemmteile vorgesehenen Offenstellung und einer den Kupplungskörper klemmenden Klemmstellung bewegbar ist.

Eine derartige Lastenträgerkupplung ist beispielsweise in DE 10 2008 047 110 A1 oder DE 10 2006 013 465 A1 erläutert. Die Lastenträgerkupplung gemäß der Druckschrift DE 10 2008 047 110 A1, die auf die Anmelderin zurückgeht, sieht vor, dass der Spannhebel sich sozusagen über den Kupplungskörper hinweg erstreckt und dabei ein als Spannbacke ausgestaltetes Stell-Klemmteil in Richtung eines bezüglich des Haltegehäuses der Lastenträgerkupplung ortsfesten Klemmteils zieht. Die Spannmechanik kragt relativ weit seitlich aus.

Es ist daher die Aufgabe der vorliegenden Erfindung, eine verbesserte Lastenträgerkupplung sowie einen eine solche Lastenträgerkupplung aufweisenden Lastenträger bereitzustellen.

Zur Lösung der Aufgabe ist bei einer Lastenträgerkupplung der eingangs genannten Art vorgesehen, dass der Spannhebel auf einen anhand eines Schwenklagers um eine Schwenkachse schwenkbaren Betätigungskörper wirkt, der mit einer Andrückrolle oder einer Gleitfläche auf das mindestens eine Stell-Klemmteil zum Verstellen desselben in die Klemmstellung einwirkt und in der Klemmstellung über eine die Schwenkachse schneidende Übertotpunkt-Achse hinweg verstellt ist und eine Übertotpunkt-Stellung einnimmt, und dass das Schwenklager anhand von Stellmitteln zumindest im Wesentlichen parallel zu der Übertotpunkt-Achse zu dem mindestens einen Stell-Klemmteil hin oder weg zur Einstellung der Spannkraft des Betätigungskörpers auf das mindestens eine Stell-Klemmteil in der Klemmstellung verstellbar ist. Die Erfindung betrifft ferner einen mit einer derartigen Lastenträgerkupplung ausgestatteten Lastenträgern.

Es ist ein Grundgedanke der vorliegenden Erfindung, dass anders als bei eingangs genannten Lastenträgerkupplung das Stell-Klemmteil sozusagen in Richtung des anderen Klemmteils gedrückt wird, d.h. dass eine im Sinne eines Andrückens wirkende Andrückrolle oder Gleitfläche auf das Stell-Klemmteil wirkt. Selbstverständlich ist es möglich, dass dieses Wirkprinzip auf beide Klemmteile angewendet wird, das heißt dass diese sozusagen zangenartig aufeinander zu bewegt werden, um den Kupplungskörper, in der Regel eine Kupplungskugel oder auch ein anderes Kupplungsstück, das eine beispielsweise polygonale Gestalt haben kann, sozusagen einzuklemmen. Es ist möglich, dass beide Stell-Klemmteile oder mehrere Stell-Klemmteile (es können natürlich auch weitere Stell-Klemmteile vorgesehen sein), mit dem erfindungsgemäßen Ansatz betätigt werden. Es ist aber auch möglich, dass ein Stell-Klemmteil gedrückt wird, d.h. dass die erfindungsgemäß ausgestaltete und/oder geometrisch erfindungsgemäß angeordnete Andrückrolle oder Gleitfläche auf das Stell-Klemmteil wirkt, während ein anderes Stell-Klemmteil anderweitig betätigt wird, beispielsweise durch eine Zug-Betätigung.

Ein Grundgedanke ist jedenfalls, dass der Betätigungskörper, das heißt beispielsweise die Andrückrolle oder eine Gleitfläche des Betätigungskörpers, sozusagen immer am selben Ort auf das Stell-Klemmteil wirkt, beispielsweise in derselben Horizontalhöhe (in Gebrauchslage der Lastenträgerkupplung bzw. des Kraftfahrzeugs oder Lastenträgers). So ist eine optimale Klemmwirkung erzielbar.

Der Betätigungskörper schwenkt also um die beispielsweise horizontal durch die Stellmittel verstellbare Schwenkachse, so dass sein Andrückpunkt oder Andrückbereich auf das Stell-Klemmteil in der Klemmstellung im wesentlichen derselbe bleibt.

Die Stellmittel umfassen beispielsweise eine Federanordnung oder wirken auf eine Federanordnung, die zur Belastung des Betätigungskörpers und/oder des mindestens einen Stell-Klemmteils in Richtung der Klemmstellung ausgestaltet ist. Die Federanordnung hat also eine Nachstelleffekt, beispielsweise in einem mechanischen Überlastfall oder bei Verschleiß einer Komponente der Lastenträgerkupplung.

Es ist möglich, dass die Stellmittel beispielsweise die Federanordnung in der Richtung zu dem Stell-Klemmteil hin oder von dem Klemmteil weg verstellen können. Beispielsweise ist eine Stellschraube möglich, welche die Federanordnung in Richtung des Stell-Klemmteils hin oder vom Stell-Klemmteil weg verstellen kann.

In Kombination dazu ist es selbstverständlich auch möglich, dass die Stellmittel einen Stellkörper zur Einstellung einer Stellkraft der Federanordnung aufweisen. Mithin wirkt also die Federanordnung mit unterschiedlicher Kraft je nachdem, welche Federspannung sozusagen durch den Stellkörper eingestellt ist, auf das Stell-Klemmteil.

Die Federanordnung umfasst zweckmäßigerweise mindestens eine Tellerfeder, vorzugsweise ein Tellerfederpaket. Vorzugsweise sind mindestens zwei gegensinnig gewölbte Tellerfedern vorgesehen. Es ist auch möglich, dass das die Federanordnung eine oder mehrere Schraubenfedern umfasst.

Es ist auch möglich, dass das Stellmittel oder der Stellkörper das Federpaket oder die Federanordnung durchdringt. Es ist auch möglich, dass das Stellmittel oder der Stellkörper frontal auf die Federanordnung einwirkt.

Die Stellmittel umfassen zweckmäßigerweise ein Linear-Stellmittel, beispielsweise eine Stellschraube, zur Verstellung des Schwenklagers des Betätigungskörpers. Es versteht sich, dass selbstverständlich auch andere Stellmittel möglich sind, die jedenfalls die Verstellung des Schwenklagers entlang der Übertotpunkt-Achse oder parallel dazu, zumindest im Wesentlichen der parallel dazu, ermöglichen. Beispielsweise könnte auch ein Schneckengetriebe oder dergleichen vorgesehen sein, um ein Lagerelement oder das Schwenklager als Ganzes parallel zur Übertotpunkt-Achse zu verstellen. Z.B. könnte eine Schnecke auf eine Lageraufnahme des Schwenklagers tangential einwirken und diese linear verstellen.

Bevorzugt ist es, wenn der Betätigungskörper etwa in Höhe eines größten Durchmessers des Kupplungskörpers auf das Stell-Klemmteil einwirkt. Somit ist gerade dort, wo der Kupplungskörper optimal zur Klemmung ausgestaltet ist, nämlich am größten Durchmesser, die Betätigung des Stell-Klemmteils vorgesehen. Beispielsweise ist der größte Durchmesser etwa im Bereich eines Äquators des als Kupplungskugel ausgestalteten Kupplungskörpers zweckmäßig. Da jedoch die Kugeloberfläche der Kupplungskugel abgesehen vom Fußbereich und einer oberseitigen Abflachung auch abseits des Äquators einen größten Durchmesser aufweist, wäre auch hier eine Klemmung ohne weiteres möglich. Mithin ist eine Klemmung im Äquator-Bereich zwar vorteilhaft, kann jedoch auch winkelig dazu erfolgen.

Der Betätigungskörper ist zweckmäßigerweise zwischen einer von dem mindestens einen Stell-Klemmteil entfernten Offenstellung und einer auf das Stell-Klemmteil einwirkenden Betätigungsstellung verstellbar. Der Betätigungskörper ist also nicht dauerhaft in Berührkontakt mit dem Stell-Klemmteil. An dieser Stelle sei aber bemerkt, dass selbstverständlich zumindest ein Berührkontakt, auch in der Offenstellung, zumindest denkbar ist. Eine direkte Kopplung auf Zug, das heißt dass sozusagen der Betätigungskörper direkt das Stell-Klemmteil von der Klemmstellung in die Offenstellung mitnimmt, ist jedoch bei dieser Ausgestaltung der Erfindung nicht gegeben.

Eine vorteilhafte Ausgestaltung der Erfindung sieht vor, dass der Betätigungskörper mit dem mindestens einen Stell-Klemmteil zur Freigabe des Kupplungskörpers in Richtung einer Offenstellung oder der Offenstellung bewegungsgekoppelt ist. Mithin ist beispielsweise eine Kupplungsanordnung abseits des Betätigungskörpers, insbesondere eine Anordnung von mindestens einem Mitnehmer, vorgesehen, die das Stell-Klemmteil von der Klemmstellung in Richtung der Offenstellung mitnimmt.

Der Betätigungskörper kann zweckmäßigerweise mit einer Komponente des Spannhebels einstückig sein. Es ist aber auch möglich, dass der Betätigungskörper, beispielsweise dessen Andrückrolle, an dem Spannhebel beweglich gelagert ist, zum Beispiel drehbar. Die Drehbarkeit kann beispielsweise auch bezüglich eines Druckstücks gegeben sein, das nämlich nicht um eine Drehachse vollständig drehbar sein muss, sondern beispielsweise schwenkbar an dem Spannhebel angeordnet sein kann.

Es ist zwar vorteilhaft, jedoch nicht unbedingt notwendig, dass der Spannhebel um die Schwenkachse des Betätigungskörpers direkt schwenkt. Es ist beispielsweise auch möglich, dass der Betätigungskörper an einer Schwenkachse schwenkbar ist, während der Spannhebel auf den Betätigungskörper drückt und um eine davon separate Spannhebel-Schwenkachse schwenkbar gelagert ist. Besonders bevorzugt ist jedoch die Ausgestaltung der Erfindung derart, dass der Spannhebel um die Schwenkachse des Betätigungskörpers schwenkbar gelagert ist. Mithin ist also die Schwenkachse des Betätigungskörpers gleichzeitig die Schwenkachse des Spannhebels. Mit anderen Worten verstellen also die Stellmittel die Schwenkachse der Spannhebels zumindest im Wesentlichen parallel zu der Übertotpunkt-Achse.

Die Parallelität dieser Verstellbewegung ist so zu verstehen, dass die Stellachse der Stellmittel bzw. des Schwenklagers beispielsweise exakt parallel zur Übertotpunkt-Achse ist, gegebenenfalls aber auch mit der Übertotpunkt-Achse einen ganz kleinen Winkel einschließt, beispielsweise von 1° oder 2°.

Das mindestens eine Stell-Klemmteil ist beispielsweise verschieblich und/oder schwenkbar an einem Haltegehäuse oder einer sonstigen Führung oder einem Lager der Lastenträgerkupplung gelagert. Bevorzugt ist eine Schwenkachse des Stell-Klemmteils oberhalb oder unterhalb einer Aufnahmekammer oder einer Aufnahmekavität für den Kupplungskörper vorgesehen.

Eine an sich eigenständige Erfindung stellt dar, wenn bei einer Lastenträgerkupplung gemäß Oberbegriff des Anspruches 1 bzw. gemäß der eingangs genannten Art, vorgesehen ist, dass mindestens ein Klemmteil, beispielsweise ein ortsfestes Klemmteil oder das Stell-Klemmteil, eine Rillenstruktur mit mindestens einer Rille zur Erhöhung des Reibschlusses zu dem Kupplungskörper aufweist. Die Rillenstruktur ist zweckmäßigerweise bei einander gegenüberliegenden Klemmteilen, also beispielsweise zwei oder drei Klemmteilen, vorgesehen. Die Klemmaufnahme ist beispielsweise in der Gestalt einer Kugelkalotte oder kalottenförmig ausgestaltet.

Es in diesem Zusammenhang ist zu erwähnen, dass selbstverständlich auch andere den Reibschluss erhöhende Mittel vorgesehen sein können, beispielsweise relativ weiche Reibschlussflächen, Gummierungen oder dergleichen.

Eine ebenfalls an sich eigenständige Erfindung stellt es dar, wenn der bei einer Lastenträger gemäß Oberbegriff des Anspruches 1 bzw. ein der eingangs genannten Art vorgesehen ist, dass die Klemmteile in einem Haltegehäuse aufgenommen sind, das mindestens eine Verstärkungskavität und/oder mindestens eine Verstärkungsrippe aufweist. Die Verstärkungsstruktur, beispielsweise röhrenförmige Verstärkungskavitäten, nach außen vor das Haltegehäuse oder nach innen in das Haltegehäuse hinein ragende Verstärkungsrippen, ermöglichen es, dass das Haltegehäuse dort, wo es mechanisch relativ wenig belastet ist, Dünen ist, beispielsweise die nehmende hat, während mechanisch belasteten Bereiche aufgrund der mechanischen Verstärkungen (Rippen oder Kavitäten) den harten Belastungen des Fahrbetriebs, auch bei großer auf dem Lastenträger auflastender Last (zum Beispiel mehrere Fahrräder) standhält.

Die insbesondere röhrenförmige Verstärkungskavität oder die Verstärkungsrippe stützen beispielsweise mindestens ein Klemmteil, vorzugsweise mehrere Klemmteile oder auch die Stellmittel quer zu der Klemmrichtung ab. Selbstverständlich kann die Verstärkungskavität oder die Verstärkungsrippe auch die vorgenannte Federanordnung abstützen. Beispielsweise bildet die Verstärkungsrippe oder die Verstärkungskavität einen Bestandteil einer das Klemmteil oder die Stellmittel, insbesondere die Federanordnung, abstützenden Rückwand. Bevorzugt ist vorgesehen, dass die mindestens eine Verstärkungsrippe eine sich zwischen den Klemmteilen erstreckende Verstärkungsrippe umfasst. An dieser Stelle sei bemerkt, dass sich beispielsweise auch eine röhrenförmige Verstärkungskavität zwischen den Klemmteilen erstrecken kann.

Das Haltegehäuse ist vorzugsweise als ein Metall-Gussteil ausgestaltet. Beispielsweise besteht es aus einem Leichtmetall. Besonders bevorzugt ist eine Leichtmetalllegierung, beispielsweise GD-ALSi7 Mg, also mit anderen Worten ist eine Aluminium-Silizium Legierung bevorzugt. Das Gussteil oder Haltegehäuse ist vorzugsweise als Druckgussteil hergestellt.

Das Haltegehäuse ist vorzugsweise in der Gestalt eines Rahmens oder Blocks ausgestaltet. Es ist beispielsweise möglich, dass es einander gegenüberliegende Seitenwände aufweist, von denen mindestens eine mit einer Verstärkungskavität, beispielsweise einer Röhrenstruktur, verstärkt ist. Zwischen den beiden Seitenwänden erstrecken sich Querträger oder Querspangen, von denen vorzugsweise mindestens eine mit einer Verstärkungsrippe und/oder einer Verstärkungsröhre ausgestattet ist oder als eine solche Verstärkungsrippe oder Verstärkungsrippe ausgestaltet ist.

Eines oder mehrere Klemmteile bestehen zweckmäßigerweise aus einem härteren Material als das Haltegehäuse. D.h. Gehäuse besteht beispielsweise wie erwähnt aus einem Leichtmetall, während das jeweilige Klemmteil aus Stahl oder einem sonstigen harten Metall besteht.

Es ist aber auch möglich, dass das Haltegehäuse mindestens eines der Klemmteile einstückig bildet. Es ist auch möglich, dass eine z.B. schalenartige Klemmaufnahme sozusagen in das Haltegehäuse eingelegt oder eingesetzt ist, so dass dieses das Klemmteil bildet. Die Klemmaufnahme als solche kann beispielsweise eine Schale oder ein Einleger in der Gestalt einer Schale sein, die in das Haltegehäuse eingesetzt ist. Der Einleger besteht zweckmäßigerweise aus dem festeren Material als das Haltegehäuse, zum Beispiel aus einem hochfestem Stahlmaterial, während das Haltegehäuse als solches aus einem weicheren Material, zum Beispiel Leichtmetall, bestehen kann.

Das Haltegehäuse weist zweckmäßigerweise eine Aufnahmekammer für den Kupplungskörper auf, wobei der Kupplungskörper durch eine Einführöffnung in die Aufnahmekammer einführbar ist. Feststehende Seitenwände des Haltegehäuses sind zweckmäßigerweise an einander entgegengesetzten Seiten der Aufnahmekammer angeordnet. Den feststehenden Wänden vorgelagert sind dann die Klemmteile. Beispielsweise ist eines der Klemmteile an der einen feststehenden Wand fest angeordnet, während das Stell-Klemmteil relativ zu der anderen feststehenden Wand beweglich gelagert ist.

Die Einführöffnung ist beispielsweise als eine Einstecköffnung oder Durchstecköffnung ausgestaltet, durch die der Kuppelkörperträger, beispielsweise der Kupplungsarm, der den Kupplungskörper trägt, durchsteckbar ist. Mithin ist also zweckmäßigerweise vorgesehen, dass das Haltegehäuse den Kupplungskörper, wenn er in die Aufnahmekammer eingesteckt ist, sozusagen vollständig einhaust.

Bevorzugt ist es, wenn sich mindestens eine Verstärkungsrippe an der Einführöffnung vorbei erstreckt. Die Verstärkungsrippe kann beispielsweise ein Bestandteil einer Wand bilden, an der die Einführöffnung vorgesehen ist. Beispielsweise ist die Einführöffnung an einer bei Gebrauch der Lastenträgerkupplung unteren Wand des Haltegehäuses vorgesehen.

Eine besonders bevorzugte Ausführungsform der Erfindung sieht vor, dass das Haltegehäuse eine obere Wand, eine untere Wand sowie diese verbindende seitliche Wände aufweist, zwischen denen die Aufnahmekavität vorgesehen ist.

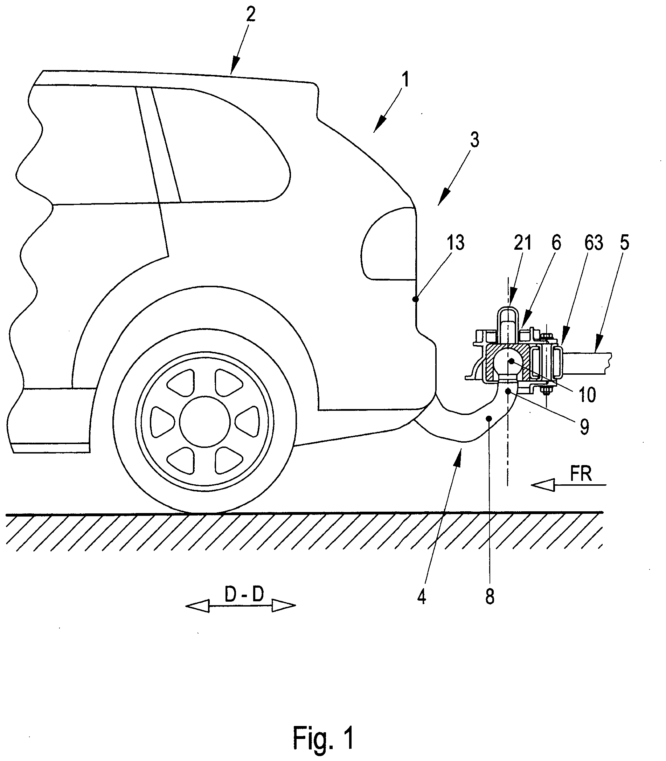

- Figur 1: eine Seitenansicht eines Kraftfahrzeugs mit einem an seine Anhängekupplung angekuppelten Lastenträgers,
- Figur 2: eine perspektivische Schrägansicht einer Lastenträgerkupplung des sowie ein Kuppelstück der Anhängekupplung Lastenträgers gemäß Figur 1,
- Figur 3: eine Querschnittsansicht der Lastenträgerkupplung gemäß Figur 2 etwa entlang einer quermittig durch die Lastenträgerkupplung in Fahrzeugquerrichtung verlaufenden Schnittlinie,
- Figur 4: eine Ansicht der Lastenträgerkupplung gemäß Figuren 2, 3 von oben, etwa in Pfeilrichtung eines Pfeils A in Figur 3,
- Figur 5: eine Querschnittsansicht der Lastenträgerkupplung gemäß Figur 2, etwa entlang einer quermittig durch die Lastenträgerkupplung in Fahrzeuglängsrichtung verlaufenden Schnittlinie, entsprechend einer Linie V-V in Figur 3,
- Figur 6: eine perspektivische Schrägansicht der Lastenträgerkupplung gemäß Figuren 2-5,
- Figur 7: eine Querschnittsansicht durch ein Stell-Klemmteil der Lastenträgerkupplung gemäß der vorstehenden Figuren, etwa entsprechend einem Pfeil X in Figur 3,
- Figur 8: eine Frontalansicht des Stell-Klemmteils gemäß Figur 7, in Richtung eines Pfeils B in Figur 7, und
- Figur 9: eine Querschnittsansicht eine Federanordnung der Lastenträgerkupplung.

An einem Heck 3 einer Karosserie 2 eines Kraftfahrzeugs 1 ist eine Anhängekupplung 4 vorgesehen, an der ein Lastenträger 5 anhand einer Lastenträgerkupplung 6 lösbar befestigt ist. Der Lastenträger 5 ist nur teilweise dargestellt und hat beispielsweise nicht dargestellte Stützelemente für auf dem Lastenträger 5 zu befördernde Lasten, beispielsweise Fahrräder, Transportkoffer oder dergleichen. Die Stützelemente können in an sich bekannter Weise beispielsweise schwenkbare Arme zum Aufstellen von Fahrrädern oder dergleichen umfassen.

Die Anhängekupplung 4 umfasst einen Kupplungsarm 8, an dessen freiem Endbereich 9 ein Kupplungskörper 10, beispielsweise eine Kupplungskugel, zum Befestigen des Lastenträgers 5 vorgesehen ist. Der Kupplungsarm 8 ist beispielsweise fest oder lösbar oder beweglich am Heck 3 des Kraftfahrzeugs 1 befestigt oder befestigbar oder gelagert. Jedenfalls steht der Kupplungsarm 8 entgegen einer Fahrtrichtung FR nach hinten vor das Kraftfahrzeug 1 vor.

Die Lastenträgerkupplung 6 umfasst eine Klemmeinrichtung 7 zum Anklemmen an den Kupplungskörper 10. Die Klemmeinrichtung 7 umfasst ein ortsfest in einem Haltegehäuse 18 angeordnetes Klemmteil 11 und ein relativ zu diesem beweglich gelagertes Stell-Klemmteil 12, das zwischen einer den Kupplungskörper 10 freigebenden Offenstellung Est und einer Klemmstellung Vst beweglich ist, in welcher der Kupplungskörper 10 zwischen den beiden Klemmteilen 11, 12 fest geklemmt ist. Die beiden Klemmteile 11, 12 umgreifen den Kupplungskörper 10 von entgegengesetzten Seiten her, z.B. von zwei Seiten quer zu einer senkrechten Mittellängsebene 13 her.

Der Kupplungskörper 10 ist als eine Kupplungskugel ausgestaltet, hat also außenseitige Kugelbereiche 14 und 15. Diese werden formschlüssig von kugelkalottenförmigen Klemmaufnahmen 16 und 17 der Klemmteile 11, 12 geklemmt.

Oberhalb einer bei Gebrauch der Lastenträgerkupplung 6 etwa horizontal verlaufenden Mittellängsebene 19 des Haltegehäuses 18 ist das Stell-Klemmteil 12 schwenkbeweglich an einem Schwenklager 20 des Haltegehäuses 18 gelagert. Alternativ wäre auch eine Schiebelagerung des Stell-Klemmteils 12 entlang einer Stellachse, beispielsweise parallel oder fluchtend mit der Mittellängsebene 19, möglich.

Die Mittellängsebene 19 ist beispielsweise koinzident mit einer Mittellängsebene des Kupplungskörpers 10, beispielsweise der Kupplungskugel.

Das Stell-Klemmteil 12 ist mit einem manuell bedienbaren Betätigungshebel oder Spannhebel 21 zwischen der Offenstellung Est und der Klemmstellung Vst verstellbar.

Der Spannhebel 21 ist an einem Schwenklager 22 schwenkbar gelagert. Das Schwenklager 22 umfasst einen Lagerbolzen 26, der ein Stellelement 25 durchdringt, das am Haltegehäuse 18 verstellbar angeordnet ist. Der Lagerbolzen 26 durchdringt ferner einen Klemmarm 23 des Spannhebels 21. Der Klemmarm 23 ist gabelförmig ausgestaltet, d.h. dass das Stellelement 25 zwischen Gabelarmen 30, 29 des Klemmarms 23 aufgenommen ist.

An einem vorderen, dem Stell-Klemmteil 12 zugewandten Bereich des Klemmarms 23 ist eine Andrückrolle 27 drehbar gelagert, die zum Andrücken des Stell-Klemmteils 12 in Richtung des gegenüberliegenden Klemmteils 11 dient. Wenn der Klemmarm 23 um die Lagerachse des Schwenklagers 22 schwenkt, rollt die Andrückrolle 27 an der zu der Klemmaufnahme 17 entgegengesetzten Außenseite des Stell-Klemmteils 12 ab und drückt dieses in Richtung des gegenüberliegenden Klemmteils 11, im Sinne eines Klemmens des Kupplungskörpers 10 zwischen den beiden Klemmteilen 11, 12.

Die Andrückrolle 27 ist an einem Achselement 28 drehbar gelagert. Das Achselement 28 durchdringt z.B. die beiden Gabelarme 29, 30 des Klemmarms 23. Die Andrückrolle 27 ist zwischen den beiden Gabelarmen 30, 29 des Klemmarms 23 angeordnet.

Der Klemmarm 23 erstreckt sich in der Klemmstellung Vst etwa horizontal, jedenfalls im Wesentlichen parallel zu der Mittellängsebene 19 oder etwa in der Mittellängsebene 19.

Die Andrückrolle 27 oder jedenfalls der vordere Bereich des Klemmarms 23 bildet einen Betätigungskörper 24. Es ist nämlich prinzipiell auch denkbar, dass der Klemmarm 23 etwas länger ist als in der Zeichnung dargestellt, d.h. dass er sich in der Klemmstellung Vst bis zu dem Stell-Klemmteil 12 hin erstreckt und mit seiner vorderen Seite direkt auf das Stell-Klemmteil 12 einwirkt, beispielsweise anhand einer Betätigungsnase oder einer sonstigen, eine Betätigungsfläche oder Gleitfläche aufweisenden Kontur (nicht dargestellt).

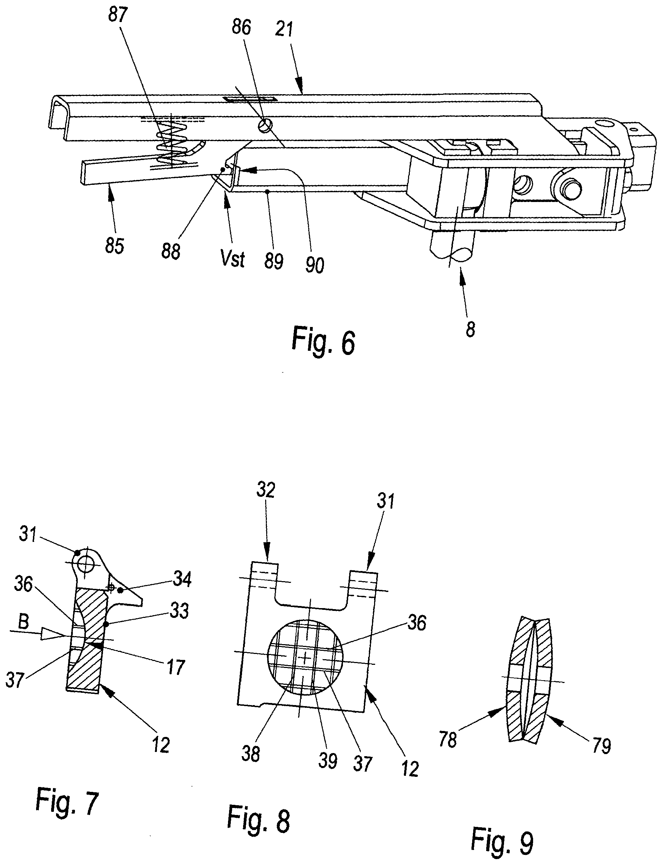

Das Stell-Klemmteil 12 ist plattenförmig ausgestaltet. Vor einen plattenartigen oder wandartigen Grundkörper 33 des Stell-Klemmteils 12 stehen mit Lageröffnungen versehene Lagervorsprünge 31, 32 vor, die von einem Lagerbolzen des Schwenklagers 20 durchdrungen sind. Man erkennt die Lagervorsprünge 31, 32 insbesondere in den Figuren 7 und 8, wo auch die entsprechenden Lagerbohrungen für den Lagerbolzen des Schwenklagers 20 angedeutet sind.

Der Lagerbolzen des Schwenklagers 20 ist an einer Oberseite des Haltegehäuses 18 angeordnet. Eine Drehachse des Lagerbolzens oder des Schwenklagers 20 verläuft beispielsweise parallel zur Achsrichtung Fr.

Das Stell-Klemmteil 12 hat Mitnehmer-Vorsprünge 34, 35, die vor den Grundkörper 33 in Richtung des Betätigungskörpers 24 bzw. des Achselements 28 vorstehen. Wenn der Betätigungskörper 24 von der Klemmstellung Vst in die Offenstellung Est schwenkt, nimmt es das Stell-Klemmteil 12 in Richtung der Offenstellung Est mit. Beispielsweise gelangen vor die Gabelarme 29, 30 vorstehende Abschnitte des Achselements 28 mit den Mitnehmer-Vorsprüngen 34, 35 in Eingriff und heben sozusagen das Stell-Klemmteil 12 von dem Kupplungskörper 10 ab, bis das Stell-Klemmteil 12 eine Einführstellung Ast einnimmt. Dadurch kommt der Kupplungskörper 10 frei und die Lastenträgerkupplung 6 kann bequem von den Kupplungskörper 10 abgehoben werden.

Das Stell-Klemmteil 12, vorzugsweise auch das andere Klemmteil 11, ist im Bereich der Klemmaufnahme 17 (beim Klemmteil 11 ist das die Klemmaufnahme 16) mit einer beispielsweise kreuzförmig verlaufenden Riefenstruktur oder Rillenstruktur versehen, die zum Beispiel Rillen 36, 37 sowie sich mit diesen kreuzende Rillen 38, 39 umfasst. Die Rillen 36-39 erhöhen einen Reibschluss zwischen dem Stell-Klemmteil 12 und dem Kupplungskörper 10, so dass die Lastenträgerkupplung 6 besser am Kupplungskörper 10 hält.

Das Klemmteil 11 ist zweckmäßigerweise auch plattenartig ausgestaltet, hat also einen beispielsweise relativ flachen Querschnitt. Die Klemmaufnahme 16 ist als eine Vertiefung an dem Grundkörper des Klemmteil 12 ausgestaltet. An dieser Vertiefung oder Klemmaufnahme 16 können selbstverständlich die oben genannten Rillen oder Riefen oder auch eine anders ausgestaltete, den Reibschluss erhöhende Vertiefungsstruktur vorgesehen sein. Beispielsweise wären auch punktförmige Vorsprünge, die sich sozusagen in die Oberfläche des Kupplungskörpers 10 ein kleines Stück weit eingraben können, denkbar.

Das Klemmteil 11 stützt sich mit seiner Rückseite 40 an einer Wand 41 des Haltegehäuses 18 ab. Obere und untere Schmalseiten 43, 44 des Klemmteils 12 stützen sich an einer oberen Wand 45 und einer unteren Wand 46 des Haltegehäuses 18 ab.

Das Haltegehäuse 18 ist vorzugsweise als ein Metallgussteil hergestellt. Es besteht zweckmäßigerweise aus einem Eisenmetall oder einem Leichtmetall. Bevorzugt ist ist die Metalllegierung GD-ALSi7 Mg oder eine sonstige Aluminium, Silizium und vorteilhaft auch Magnesium enthaltende Legierung. Beispielsweise ist das Haltegehäuse 18 als Druckguss-Gehäuse hergestellt.

Das Haltegehäuse 18 hat beispielsweise einen grundsätzlich U-förmigen Querschnitt 47, d.h. dass eine Wand 48 die beiden oberen und unteren Wände 45, 46 miteinander verbindet.

Die beiden oberen und unteren Wände 45, 46 sind weiterhin durch die erläuterte Wand 41 sowie eine Wand 51 und eine Wand 53 miteinander verbunden. Die Wände 41, 51, 53 sind parallel zueinander angeordnet.

Zwischen den Wänden 51 und 41 erstreckt sich ein Abschnitt 55 der oberen Wand 45 und ein Abschnitt 56 der unteren Wand 46 sowie eine Stegwand 54, wobei die Abschnitte 56, 55 sowie die Stegwand 54 vorzugsweise im Wesentlichen parallel zueinander verlaufen. Die Wände 51, 41 begrenzen zusammen mit den Wand-Abschnitten 55, 56 und der dazwischen angeordneten Stegwand 54 zwei rohrförmige Verstärkungskavitäten Q1, Q2. Dadurch ist eine Verstärkungsstruktur 42 gebildet, die das Klemmteil 11 rückseitig optimal abstützen kann.

Die Wand 41 kann man auch als eine Stützwand 52 bezeichnen, weil sie das Klemmteil 11 rückseitig abstützt.

Vor die obere Wand 45 und die untere Wand 46 des Haltegehäuses 18 stehen jeweils Verstärkungsrippen 57 und 58 vor. Die Verstärkungsrippen 57 und 58 bilden sozusagen eine jeweilige Verlängerung der Wand 45 oder 46. An den Verstärkungsrippen 57 und 58 sind zusätzlich noch Haltevorsprünge 59, 60 (bezüglich der oberen Wand 45) und Haltevorsprünge 61, 62 bezüglich der unteren Wand 46 vorgesehen. Die Haltevorsprünge 59-62 sind derart zueinander beabstandet, dass sie eine Aufnahme 69 für einen Querträger 63 des Lastenträgers 5 bilden.

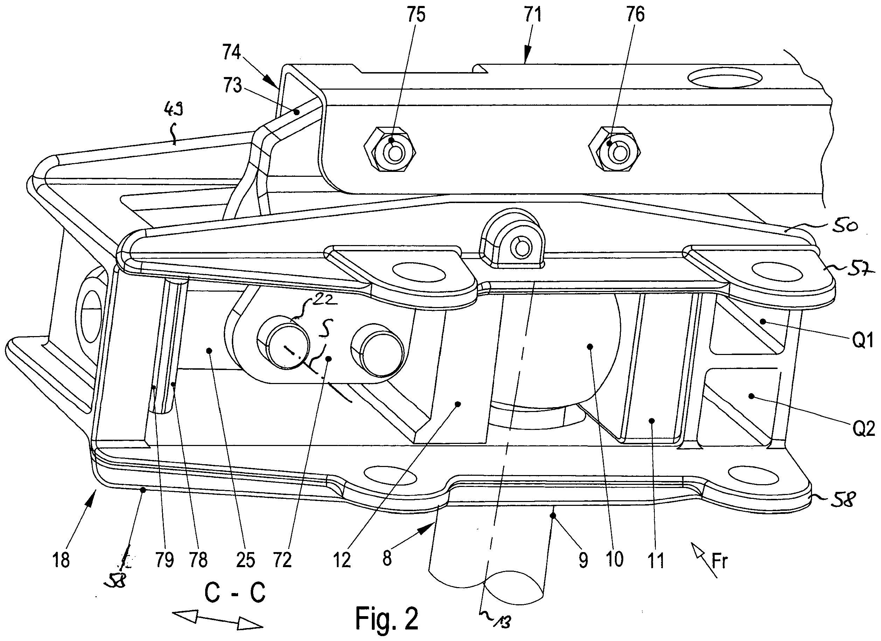

Der Querträger 63, beispielsweise ein Tragrohr, hat vorzugsweise einen rechteckigen Querschnitt. Mithin ist eine Außenkontur der Klemmteile 11, 12 vorteilhaft so angeordnet und ausgestaltet, dass sie sich mit ihren Schmalseiten ebenfalls am Querträger 63 abstützen. Das ist aber eine optionale Maßnahme. Jedenfalls stützen sich die schmalen Stirnseiten der Wände 51, 52 und auch die etwas verbreiterte Stirnseite der Wand 53 zweckmäßigerweise an einer Wand 70 des Querträgers 63 ab, wenn er mit der Lastenträgerkupplung 6 verbunden ist. Der Querträger 63 verschließt die Aufnahme 69, die zumindest in dem in Figur 2 dargestellten Zustand gleichzeitig eine Art offene Seite der Lastenträgerkupplung 6 darstellt.

Die Haltevorsprünge 59-62 haben Bohrungen 65, 66, die von Schrauben 64 durchdrungen sind. Die Schrauben sind zudem durch den Querträger 63 durchgesteckt. Auf die Schrauben 64 sind nicht näher bezeichnete Muttern durchgesteckt, d.h. die Köpfe der Schrauben 64 einerseits stützen sich an den oberen Haltevorsprünge 59, 60 und die auf die Schrauben 64 aufgeschraubten Muttern an den unteren Haltevorsprüngen 61, 62 ab.

Vor die obere Wand 45 stehen Verstärkungsrippen 49, 50 vor, die das Haltegehäuse 18 in Querrichtung verstärken. Die Verstärkungsrippen 49, 50 erstrecken sich entlang einer Richtung C-C, also quer zur Fahrtrichtung FR oder einer Richtung D-D. Sie überspannen eine Aufnahmekammer 83 zur Aufnahme des Kupplungskörpers 10. Seitlich wird die Aufnahmekammer 83 durch die Klemmteile 11, 12 begrenzt.

An den Verstärkungsrippen 49, 50 sind zu dem noch Lageraufnahmen 67, 68 des Schwenklagers 20 vorgesehen. Die Lageraufnahmen 67, 68 werden von einem Lagerbolzen durchdrungen, der zudem auch die Lagervorsprünge 31, 32 des Klemmteils 12 durchdringt. Mithin bilden also die Verstärkungsrippen 49, 50 auch noch Lagerkomponenten des Schwenklagers 20.

Der Spannhebel 21 und der Klemmarm 23 sind vorliegend einstückig. Bei einer alternativen Ausführungsform gemäß Figur 2 ist eine mehrteilige Variante dargestellt, d.h. dass ein Spannhebel 71 an einem dem Haltegehäuse 18 zugewandten Längsendbereich oder Halteabschnitt 74 anhand von Schrauben 75, 76 mit einem Montageabschnitt 73 eines Spannarms oder Klemmarms 72 verbunden ist. Der Montageabschnitt 73 ist in dem im Querschnitt U-förmigen Halteabschnitt 74 aufgenommen. Der Klemmarm 72 entspricht im wesentlichen dem Klemmarm 23.

Der Spannhebel 21 oder 71 erstreckt sich im Wesentlichen in Richtung der Achse C-C, also in Fahrzeugquerrichtung.

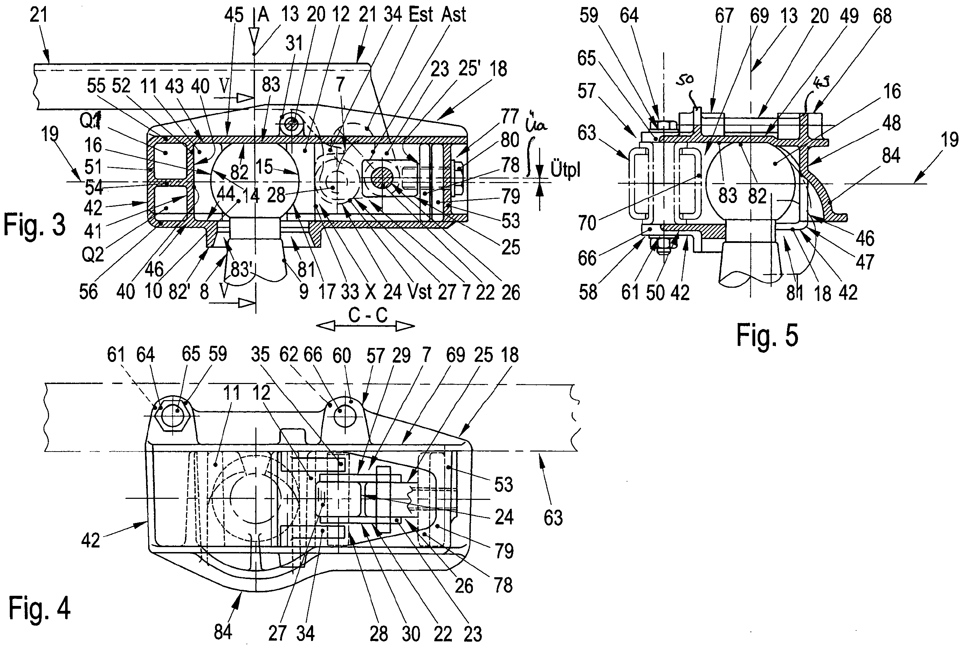

Der Klemmarm 23 oder 72 sind in der Klemmstellung Vst sozusagen zwischen die eine Querwand oder Stützwand bildende Wand 53 und das Stell-Klemmteil 12 gespannt. Mithin stützt sich also der Klemmarm 23 oder 72 sozusagen an einer Seitenwand, nämlich der Querwand 53 ab. Die Anordnung ist allerdings so getroffen, dass in der Klemmstellung Vst die Andrückrolle 27, mithin also der Betätigungskörper 24, in eine Übertotpunkt-Stellung Ütpl verstellt ist, bei der ein Druckpunkt der Andrückrolle 27 etwa im Bereich der Mittellängsebene 19 und somit etwa im Bereich eines Äquators oder größten Durchmessers des Kupplungskörpers 10 auf das Stell-Klemmteil 12 einwirkt. Eine Schwenkachse S des Schwenklagers 22 und somit eine Übertotpunkt-Achse Üa ist oberhalb der Mittellängsebene 19 oder der Ebene des Druckpunkts des Betätigungskörpers 24 vorgesehen, was die Übertotpunkt-Stellung Ütpl begründet, siehe dazu insbesondere Figur 3.

Anhand von Stellmitteln 77 ist gewährleistet, dass der Andruckbereich des Betätigungskörpers 24 etwa im Bereich der Mittellängsebene 19 bleibt, jedenfalls in Bezug auf das Stell-Klemmteil 12 etwa im selben Bereich bleibt. Zudem sorgen die Stellmittel 77 dafür, dass die Lage der Schwenkachse S des Schwenklagers 22 ebenfalls knapp oberhalb der Mittellängsebene 19 bleibt, wie in Figur 3 dargestellt. Dadurch sind stets dieselben Druckverhältnisse gegeben, d.h. die Lastenträgerkupplung 6 hat sozusagen stets dieselbe Übertotpunkt-Stellung Ütpl. Die Übertotpunkt-Achse Üa bleibt in etwa in derselben horizontalen Ebene.

Die Stellmittel 77 verstellen die Lagerachse des Schwenklagers 22 im Wesentlichen parallel zur Mittellängsebene 19 bzw. parallel zur Übertotpunkt-Achse Üa.

Beispielsweise umfassen die Stellmittel 77 eine Stellschraube 80, die durch die Querwand 53 hindurch gesteckt ist und Federelemente 78, 79 einer Federanordnung durchdringt. Die Stellschraube 80 ist zu dem in das Stellelement 25 eingeschraubt, das zugleich die Lagerbasis für das Schwenklager 22 darstellt. Mithin sind also die Federelemente 79, 78 sowie die Quer-Wand 53 sandwichartig zwischen dem Kopf der Stellschraube 80 und dem Stellelement 25 angeordnet.

Die Federanordnung mit den beispielsweise als Tellerfedern ausgestalteten Federelementen 78, 79 wirkt zugleich als Nachstelleinrichtung, das heißt sie belastet das Stellelement 25 und somit zugleich auch das Schwenklager 20 und indirekt somit auch den Klemmarm 23 in Richtung der Klemmstellung Vst. Die Federanordnung mit den Federelementen 78, 79 wirkt einem etwaigen Verschleiß entgegen. Zudem kann die Stellschraube 80 weiter oder weniger weit in das Stellelement 25 eingeschraubt werden, bildet also ein Lineargetriebe zum Verstellen einer Linearposition des Schwenklagers 22 relativ zum Stell-Klemmteil 12. Mit der Stellschraube 80 kann zudem die Federkraft, mit denen die Federelemente 78, 79 auf das Stellelement 25 wirken, eingestellt werden. Das Federelement 78 bildet einen Stützanschlag 25' für das Stellelement 25.

An einer Unterseite des Haltegehäuses 18, nämlich der unteren Wand 46, ist eine Einführöffnung 81 für den Kupplungskörper 10 vorgesehen. Die Einführöffnung 81 hat beispielsweise eine sich konisch zur Aufnahmekammer 83 verjüngende Kontur 83', was ein Einführen des Kupplungskörpers 10 in die Aufnahmekammer 83 erleichtert.

Die Position der oberen Wand 45 bezüglich der Aufnahmekammer 83 ist so ausgestaltet, dass sie sich an einer oberen Abflachung 82 des Kupplungskörpers 10 abstützen kann. Das erleichtert die Positionierung der Lastenträgerkupplung 6 am Kupplungskörper 10.

Die Einführöffnung 81 hat zweckmäßigerweise einen nach unten vor die Wand 46 vorstehenden Kragen 82', der eine Einführung des Kupplungskörpers 10 in die Aufnahmekammer 83 erleichtert. Die vorgenannte Einführschräge oder Kontur 83' ist an den Kragen 82' vorgesehen.

Auch die Wand 48 kann zur Abstützung am beispielsweise als Kupplungskugel ausgestalteten Kupplungskörper 10 beitragen, jedenfalls zur Einführung des Kupplungskörpers 10 in die Aufnahmekammer 83, nämlich beispielsweise anhand einer Ausformung 84, die kugelkalottenartig ist.

Eine zusätzliche Sicherheit der Verriegelung bzw. Verklemmung schafft eine Sicherungseinrichtung mit einem Sicherungshebel 85, der am Spannhebel 21, jedenfalls dessen Betätigungsarm, angeordnet ist. Der Sicherungshebel 85 ist beispielsweise mittels eines Schwenklagers 86 am Spannhebel 21 schwenkbar gelagert. Er wird durch eine Feder 87, die sich einerseits am Sicherungshebel 85 und andererseits am Spannhebel 21 abstützt, in eine Sicherungsstellung beaufschlagt, die in Figur 6 eingezeichnet ist. Eine Nase 88 des Sicherungshebels 85 greift dabei in eine Aufnahme 90, die beispielsweise an einer Wand 89 des Querträgers 63 vorgesehen ist, ein. Der Bediener muss also zunächst den Sicherungshebel 85 ins sichern, bevor er den Spannhebel 21 aus der Klemmstellung Vst in die Offenstellung oder Entriegelungsstellung Est verstellen kann.

## Patentansprüche

1. Lastenträgerkupplung für einen Lastenträger (5), zum lösbaren Befestigen an einem Kupplungskörper (10), insbesondere einer Kupplungskugel, einer Anhängekupplung (4) eines Kraftfahrzeugs (1), mit einer Klemmeinrichtung (7), die Klemmteile (11, 12) umfasst, von denen mindestens eines ein Stell-Klemmteil (12) bildet, das anhand eines Spannhebels (21) zwischen einer zum Einbringen des Kupplungskörpers (10) zwischen die Klemmteile (11, 12) vorgesehenen Offenstellung (Est) und einer den Kupplungskörper (10) klemmenden Klemmstellung (Vst) bewegbar ist, **dadurch gekennzeichnet, dass** der Spannhebel (21) auf einen anhand eines Schwenklagers (22) um eine Schwenkachse (S) schwenkbaren Betätigungskörper (24) wirkt, der mit einer Andrückrolle (27) oder einer Gleitfläche auf das mindestens eine Stell-Klemmteil (12) zum Verstellen desselben in die Klemmstellung (Vst) einwirkt und in der Klemmstellung (Vst) über eine die Schwenkachse (S) schneidende Übertotpunkt-Achse (Üa) hinweg verstellt ist und eine Übertotpunkt-Stellung (Ütpl) einnimmt, und dass das Schwenklager (22) anhand von Stellmitteln (77) zumindest im Wesentlichen parallel zu der Übertotpunkt-Achse (Üa) zu dem mindestens einen Stell-Klemmteil (12) hin oder weg zur Einstellung der Spannkraft des Betätigungskörpers (24) auf das mindestens eine Stell-Klemmteil (12) in der Klemmstellung (Vst) verstellbar ist.

2. Lastenträgerkupplung nach Anspruch 1, **dadurch gekennzeichnet, dass** die Stellmittel (77) eine Federanordnung zur Belastung des Betätigungskörpers (24) und/oder des mindestens einen Stell-Klemmteils (12) in Richtung der Klemmstellung (Vst) umfassen, wobei die Stellmittel (77) zweckmäßigerweise einen Stellkörper zur Einstellung einer Stellkraft der Federanordnung (78, 79) aufweisen.

3. Lastenträgerkupplung nach Anspruch 1 oder 2, **dadurch gekennzeichnet, dass** die Stellmittel (77) ein Linear-Stellmittel (77) zur Verstellung des Schwenklagers (22) aufweisen.

4. Lastenträgerkupplung nach einem der vorhergehenden Ansprüche, **dadurch gekennzeichnet, dass** der Betätigungskörper (24) etwa in Höhe eines größten Durchmessers des Kupplungskörpers (10) auf das Stell-Klemmteil (12) einwirkt.

5. Lastenträgerkupplung nach einem der vorhergehenden Ansprüche, **dadurch gekennzeichnet, dass** der Betätigungskörper (24) zwischen einer von dem mindestens einen Stell-Klemmteil (12) entfernten Offenstellung (Est) und einer auf das Stell-Klemmteil (12) einwirkenden Betätigungsstellung verstellbar ist.

6. Lastenträgerkupplung nach einem der vorhergehenden Ansprüche, **dadurch gekennzeichnet, dass** der Betätigungskörper (24) mit dem mindestens einen Stell-Klemmteil (12) zur Freigabe des Kupplungskörpers (10) in Richtung einer Offenstellung (Est) bewegungsgekoppelt ist.

7. Lastenträgerkupplung nach einem der vorhergehenden Ansprüche, **dadurch gekennzeichnet, dass** der Betätigungskörper (24) einstückig mit einer Komponente des Spannhebels (21) oder dem Spannhebel (21) als solchem ist oder an dem Spannhebel (21) beweglich gelagert ist.

8. Lastenträgerkupplung nach einem der vorhergehenden Ansprüche, **dadurch gekennzeichnet, dass** der Spannhebel (21) um die Schwenkachse (S) des Betätigungskörpers (24) schwenkbar gelagert ist.

9. Lastenträgerkupplung nach einem der vorhergehenden Ansprüche, **dadurch gekennzeichnet, dass** mindestens ein Klemmteil (11, 12) eine Klemmaufnahme (16, 17) für den Kupplungskörper (10) aufweist, die eine Rillenstruktur (36-39) zur Erhöhung des Reibschlusses zu dem Kupplungskörper (10) aufweist.

10. Lastenträgerkupplung nach einem der vorhergehenden Ansprüche, **dadurch gekennzeichnet, dass** die Klemmteile (11, 12) in einem Haltegehäuse (18) aufgenommen sind, das mindestens eine Verstärkungskavität (Q1, Q2) und/oder mindestens eine Verstärkungsrippe (57, 58) aufweist.

11. Lastenträgerkupplung nach Anspruch 10, **dadurch gekennzeichnet, dass** die Verstärkungskavität (Q1, Q2) oder die mindestens eine Verstärkungsrippe (57, 58) mindestens ein Klemmteil (11, 12) oder die Stellmittel (77) quer zu der Klemmrichtung abstützt und/oder dass die mindestens eine Verstärkungsrippe (57, 58) und/oder die mindestens eine Verstärkungskavität (Q1, Q2) eine sich zwischen den Klemmteilen (11, 12) erstreckende Verstärkungsrippe (57, 58) oder Verstärkungskavität (Q1, Q2) umfasst.

12. Lastenträgerkupplung nach Anspruch 10 oder 11, **dadurch gekennzeichnet, dass** das Haltegehäuse (18) als ein Metall-Gussteil hergestellt ist und/oder dass das Haltegehäuse (18) eine rahmenartige oder blockartige Gestalt aufweist.

13. Lastenträgerkupplung nach einem der Ansprüche 10 bis 12, **dadurch gekennzeichnet, dass** mindestens ein Klemmteil (11, 12) aus einem härteren Material als das Haltegehäuse (18) besteht und/oder dass das Haltegehäuse (18) mindestens eines der Klemmteile (11, 12) einstückig bildet.

14. Lastenträgerkupplung nach einem der Ansprüche 10 bis 13, **dadurch gekennzeichnet, dass** das Haltegehäuse (18) eine Aufnahmekammer (83) für den Kupplungskörper (10) mit einer Einführöffnung (81) aufweist, wobei vorzugsweise feststehende Seitenwände des Haltegehäuses (18) an einander entgegengesetzten Seiten der Aufnahmekammer (83) angeordnet sind und/oder die Einführöffnung (81) zweckmäßigerweise ringförmig ist und/oder eine Einführschräge (83') aufweist und/oder sich mindestens eine Verstärkungsrippe (57, 58) an der Einführöffnung (81) vorbei erstreckt.

15. Lastenträger mit einer Lastenträgerkupplung nach einem der vorhergehenden Ansprüche.

## Claims

1. Load carrier coupling for a load carrier (5), for releasable attaching to a coupling body (10), in particular a coupling ball, of a trailer coupling (4) of a motor vehicle (1), with a clamping device (7) which includes clamping parts (11, 12), one of which forms an actuating clamping part (12) which, with the aid of a clamping lever (21), may be moved between an open position (Est) provided for bringing the coupling body (10) between the clamping parts (11, 12), and a clamping position (Vst) clamping the coupling body (10), **characterised in that** the clamping lever (21) acts on an actuating body (24) pivotable with the aid of a swivel bearing (22) around a swivel axis (S) and which acts with a pressure roller (27) or a sliding surface on the actuating clamping part or parts (12) to shift the latter into the clamping position (Vst) and in the clamping position (Vst) is shifted over a top dead centre axis (Ua) intersecting the swivel axis (S) and adopts a top dead centre position (Utp), and that the swivel bearing (22) may be shifted with the aid of adjusting means (77), at least substantially parallel to the top dead centre axis (Ua), towards or away from the actuating clamping part or parts (12), for setting the clamping force of the actuating body (24) on the actuating clamping part or parts (12) in the clamping position (Vst).

2. Load carrier coupling according to claim 1, **characterised in that** the adjusting means (77) comprise a spring assembly for loading the actuating body (24) and/or the actuating clamping part or parts (12) in the direction of the clamping position (Vst), wherein the adjusting means (77) expediently have an actuating body for setting the actuating force of the spring assembly (78, 79).

3. Load carrier coupling according to claim 1 or 2, **characterised in that** the adjusting means (77) have linear adjusting means (77) for shifting the swivel bearing (22).

4. Load carrier coupling according to any of the preceding claims, **characterised in that** the actuating body (24) acts on the actuating clamping part (12) roughly at the height of a maximum diameter of the coupling body (10).

5. Load carrier coupling according to any of the preceding claims, **characterised in that** the actuating body (24) may be moved between an open position (Est) removed from the actuating clamping part or parts (12) and an actuating position acting on the actuating clamping part or parts (12).

6. Load carrier coupling according to any of the preceding claims, **characterised in that** the actuating body (24) is movement-coupled to the actuating clamping part or parts (12) to release the coupling body (10) in the direction of an open position (Est).

7. Load carrier coupling according to any of the preceding claims, **characterised in that** the actuating body (24) is integral with a component of the clamping lever (21) or the clamping lever (21) as such, or is movably mounted on the clamping lever (21).

8. Load carrier coupling according to any of the preceding claims, **characterised in that** the clamping lever (21) is pivotably mounted around the swivel axis (S) of the actuating body (24).

9. Load carrier coupling according to any of the preceding claims, **characterised in that** at least one clamping part (11, 12) has a clamping location (16, 17) for the coupling body (10), which has a groove structure (36-39) to increase the frictional connection with the coupling body (10).

10. Load carrier coupling according to any of the preceding claims, **characterised in that** the clamping parts (11, 12) are accommodated in a holding housing (18) which has at least one reinforcing cavity (Q1, Q2) and/or at least one reinforcing rib (57, 58).

11. Load carrier coupling according to any of the preceding claims, **characterised in that** the reinforcing cavity (Q1, Q2) or the reinforcing rib or ribs (57, 58) support at least one clamping part (11, 12) or the adjusting means (77) transversely to the clamping direction, and/or that the reinforcing rib or ribs (57, 58) and/or the reinforcing cavity or cavities (Q1, Q2) include a reinforcing rib (57, 58) or reinforcing cavity (Q1, Q2) extending between the clamping parts (11, 12).

12. Load carrier coupling according to claim 10 or 11, **characterised in that** the holding housing (18) is made as a metal casting and/or that the holding housing (18) has a frame-like or block-like shape.

13. Load carrier coupling according to any of claims 10 to 12, **characterised in that** the clamping part or parts (11, 12) are made of a harder material than the holding housing (18) and/or that the holding housing (18) integrally forms one of the clamping parts (11, 12).

14. Load carrier coupling according to any of claims 10 to 13, **characterised in that** the holding housing (18) has a locating chamber (83) for the coupling body (10) with an insertion hole (81), wherein preferably fixed side walls of the holding housing (18) are arranged on opposite sides of the locating chamber (83) and/or the insertion hole (81) is expediently annular and/or has an insertion bevel (83') and/or at least one reinforcing rib (57, 58) extends past the insertion hole (81).

15. Load carrier with a load carrier coupling according to any of the preceding claims.

## Revendications

1. Attelage de support de charges pour un support de charges (5) destiné à être fixé de manière amovible au niveau d'un corps d'attelage (10), en particulier à une boule d'attelage, à un attelage de remorque (4) d'un véhicule automobile (1), avec un dispositif de serrage (7), qui comprend des parties de serrage (11, 12), dont au moins une forme une partie de serrage de réglage (12), qui peut être déplacée à l'aide d'un levier de mise sous tension (21) entre une position ouverte (Est) prévue aux fins de l'introduction du corps d'attelage (10) entre les parties de serrage (11, 12) et une position de serrage (Vst) serrant le corps d'attelage (10), **caractérisé en ce que** le levier de mise sous tension (21) agit sur un corps d'actionnement (24) pouvant pivoter autour d'un axe de pivotement (S) à l'aide d'un palier pivotant (22), lequel corps d'actionnement agit avec un galet de compression (27) ou une surface de glissement sur l'au moins une partie de serrage de réglage (12) aux fins de l'ajustement de cette dernière dans la position de serrage (Vst) et est ajusté dans la position de serrage (Vst) au-delà d'un axe de passage de point mort (Üa) coupant l'axe de pivotement (S) et adopte une position de passage de point mort (Ütpl), et que le palier pivotant (22) peut être ajusté à l'aide de moyens de réglage (77) au moins sensiblement de manière parallèle par rapport à l'axe de passage de point mort (Üa) en direction de l'au moins une partie de serrage de réglage (12) ou de manière à s'en éloigner aux fins du réglage de la force de mise sous tension du corps d'actionnement (24) sur l'au moins une partie de serrage de réglage (12) dans la position de serrage (Vst).

2. Attelage de support de charges selon la revendication 1, **caractérisé en ce que** les moyens de réglage (77) comprennent un ensemble de ressorts servant à contraindre le corps d'actionnement (24) et/ou l'au moins une partie de serrage de réglage (12) en direction de la position de serrage (Vst), dans lequel les moyens de réglage (77) présentent de manière appropriée un corps de réglage servant à régler une force de réglage de l'ensemble de ressorts (78, 79).

3. Attelage de support de charges selon la revendication 1 ou 2, **caractérisé en ce que** les moyens de réglage (77) présentent un moyen de réglage linéaire (77) servant à ajuster le palier pivotant (22).

4. Attelage de support de charges selon l'une quelconque des revendications précédentes, **caractérisé en ce que** le corps d'actionnement (24) agit sur la partie de serrage de réglage (12) approximativement à hauteur d'un diamètre le plus grand du corps d'attelage (10).

5. Attelage de support de charges selon l'une quelconque des revendications précédentes, **caractérisé en ce que** le corps d'actionnement (24) peut être ajusté entre une position ouverte (Est) éloignée de l'au moins une partie de serrage de réglage (12) et une position d'actionnement agissant sur la partie de serrage de réglage (12).

6. Attelage de support de charges selon l'une quelconque des revendications précédentes, **caractérisé en ce que** le corps d'actionnement (24) est couplé en déplacement en direction d'une position ouverte (Est) avec l'au moins une partie de serrage de réglage (12) afin de débloquer le corps d'attelage (10).

7. Attelage de support de charges selon l'une quelconque des revendications précédentes, **caractérisé en ce que** le corps d'actionnement (24) est d'un seul tenant avec un composant du levier de mise sous tension (21) ou le levier de mise sous tension (21) en tant que tel ou est monté de manière mobile au niveau du levier de mise sous tension (21).

8. Attelage de support de charges selon l'une quelconque des revendications précédentes, **caractérisé en ce que** le levier de mise sous tension (21) est monté de manière à pouvoir pivoter autour de l'axe de pivotement (S) du corps d'actionnement (24).

9. Attelage de support de charges selon l'une quelconque des revendications précédentes, **caractérisé en ce qu'**au moins une partie de serrage (11, 12) présente un logement de serrage (16, 17) pour le corps d'attelage (10), lequel logement de serrage présente une structure rainurée (36 - 39) servant à augmenter la liaison à friction avec le corps d'attelage (10).

10. Attelage de support de charges selon l'une quelconque des revendications précédentes, **caractérisé en ce que** les parties de serrage (11, 12) sont logées dans un boîtier de maintien (18), qui présente au moins une cavité de renforcement (Q1, Q2) et/ou au moins une rainure de renforcement (57, 58).

11. Attelage de support de charges selon la revendication 10, **caractérisé en ce que** la cavité de renforcement (Q1, Q2) ou l'au moins une rainure de renforcement (57, 58) soutient au moins une partie de serrage (11, 12) ou les moyens de réglage (77) de manière transversale par rapport à la direction de serrage, et/ou que l'au moins une rainure de renforcement (57, 58) et/ou l'au moins une cavité de renforcement (Q1, Q2) comprennent une rainure de renforcement (57, 58) ou une cavité de renforcement (Q1, Q2) s'étendant entre les parties de serrage (11, 12).

12. Attelage de support de charges selon la revendication 10 ou 11, **caractérisé en ce que** le boîtier de maintien (18) est fabriqué sous la forme d'une pièce de fonte en métal, et/ou que le boîtier de maintien (18) présente une forme de type châssis ou bloc.

13. Attelage de support de charges selon l'une quelconque des revendications 10 à 12, **caractérisé en ce qu'**au moins une partie de serrage (11, 12) est constituée d'un matériau plus dur que le boîtier de maintien (18), et/ou que le boîtier de maintien (18) forme d'un seul tenant au moins une des parties de serrage (11, 12).

14. Attelage de support de charges selon l'une quelconque des revendications 10 à 13, **caractérisé en ce que** le boîtier de maintien (18) présente une chambre de logement (83) pour le corps d'attelage (10) pourvue d'une ouverture d'introduction (81), dans lequel de préférence des parois latérales immobiles du boîtier de maintien (18) sont disposées au niveau de côtés opposés les uns aux autres de la chambre de logement (83) et/ou l'ouverture d'introduction (81) est de manière appropriée de forme annulaire et/ou présente un biseau d'introduction (83') et/ou au moins une nervure de renforcement (57, 58) s'étend le long de l'ouverture d'introduction (81).

15. Support de charges avec un attelage de support de charges selon l'une quelconque des revendications précédentes.
